Europäisches Patentamt

European Patent Office

Office européen des brevets

(11) Publication number: **0 076 881**
A1

# EUROPEAN PATENT APPLICATION

(21) Application number: 81304691.9

(22) Date of filing: 08.10.81

(51) Int. Cl.³: **B 62 D 43/02**

(43) Date of publication of application: 20.04.83
Bulletin 83/16

(84) Designated Contracting States: **AT BE CH DE FR GB IT LI LU NL SE**

(71) Applicant: **METRO TRANSPORT (PROPRIETARY) LIMITED, 010 Van Wyke Street, Roodepoort Transvaal Province (ZA)**

(72) Inventor: **Potgieter, Maurice Stephen, 22 Daniel Malan Avenue, Florida Park Transvaal Province (ZA)**

(74) Representative: **Dixon, Donald Cossar et al, Gee & Co. Chancery House Chancery Lane, London WC2 1QU (GB)**

(54) Vehicle spare wheel carrier.

(57) A spare wheel carrier has a plate (1) which can be mounted horizontally to a vehicle chassis (5) and which carries a central hook (6) at one end and a pivotable hook (10) at the other. The central hook can be extended below the plate to engage the periphery of the centre opening in a wheel rim, and the pivotable hook can engage the outer wheel rim edge, when this edge is pivoted upwardly towards the plate about the central hook. The central hook can be drawn towards the plate by a nut (7) to lock the wheel in position, and lock the pivotable hook via a mechanical link (12).

## VEHICLE SPARE WHEEL CARRIER

THIS INVENTION relates to vehicle spare wheel carriers.

Wheel carriers of the type envisaged by this invention are known and are characterised by a hook on the carrier about which the spare wheel is pivoted while being mounted or removed. A problem associated with this type of carrier has been encountered when removing the spare wheel from the carrier in that the wheel has tended to fall and occasionally injured the user. A further problem encountered has been in the securing of the wheel to the carrier. Known carriers of this type have required a system of nuts and bolts to secure the wheel to the carrier and these systems are both time consuming and laborious to engage.

It is the object of this invention to provide a spare wheel carrier with which the above disadvantages can at least be diminished.

In accordance with this invention there is provided a spare wheel carrier comprising a body having means whereby it can be mounted in a suitable position to the chassis of a vehicle, an extendable hook member secured to the body by a nut, a pivotally mounted hook member hinged to the body and moveable in a rectilinear direction towards and away from the extendable hook member, a lever attached to the pivotally mounted hook member to operate said pivotally mounted hook member, the two hook members being so located that when the carrier is mounted on a vehicle the periphery of the central opening of a vehicle wheel can be engaged between

0076881

the hook members such that movement of the extendable hook member will clamp or release the wheel rim with respect to the body.

Further there is provided for the body of the carrier to form with the extendable hook member a clamp whereby the spare wheel will be held up against the body of the carrier when the nut is in a tightened position and the spare wheel will be lowered to the ground as the nut is loosened.

Further there is provided for an elastomeric material sheet to be bonded to the underside of the carrier body and against which the wheel hub will seat when in position.

Still further there is provided for a locating bar to be affixed to the underside of the body of the carrier such that when the pivotally mounted hook is disengaged from the wheel the wheel is still held in position on the carrier by the locating bar.

Yet further there is provided for the nut on the extendable hook to comprise a nut and a large diameter washer attached thereto, the washer characterised in that it has a gap therein sufficiently wide to allow the

- 4 -

0076881

lever to pass through said gap and thereafter be held down by the washer.

Further a spring may be provided to bias the pivotally mounted hook member away from the extendable hook member.

In order that the invention may be more fully understood one embodiment thereof is described, reference being made to the accompanying sketches in which :-

Figure 1 is a sectional elevation through a wheel carrier according to a preferred embodiment of the invention shown by arrows "21" in Figure 3;

Figure 2 is an end elevation of the carrier looking in direction of the arrow "19" shown in Figure 1; and,

Figure 3 is a cut-away plan view of the wheel carrier of Figure 1 looking in the direction of arrow "20" shown in Figure 1.

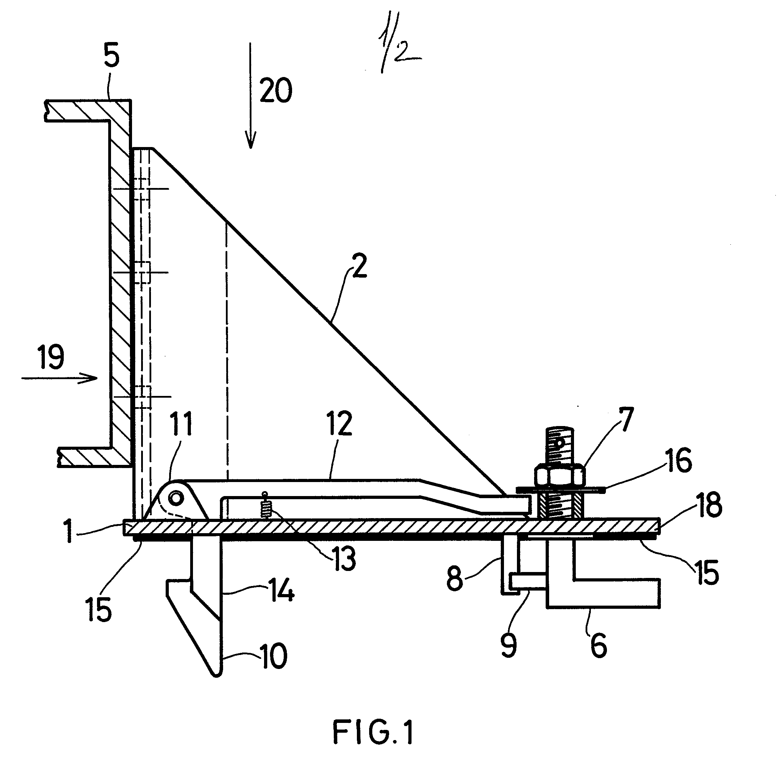

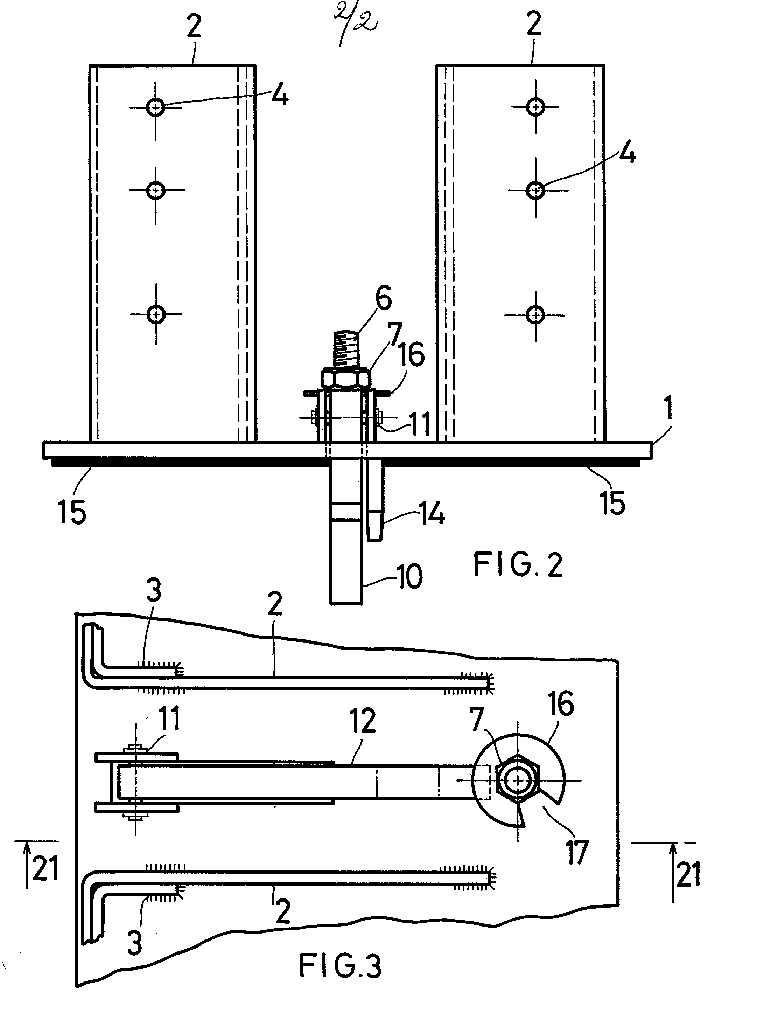

With reference to Figures 1 to 3 the wheel carrier comprises a body plate 1 having means whereby it may be mounted on the chassis of a vehicle. Said means comprising two triangular gusset plates 2 each stiffened by an angle section 3. The gusset plate 2 is welded to the upper face of the body plate 1 and is also welded to the angle section 3. The gusset plates and angle sections have holes 4 therethrough whereby the carrier may be fixed to the chassis 5 of a vehicle.

In the following description it is assumed that the carrier is fixed to the chassis 5 of a vehicle. An extendable hook 6 passes through the body plate, being held in position by a nut 7. A bar 8 is welded to the underside of body plate 1 and acts in co-operation with a small connecting rod 9 which is attached to extendable hook 6 to maintain the extendable hook in a vertical position. A pivotally mounted hook member 10 is attached to the body plate through a hinge 11 mounted on the top of the body plate 1. A lever 12 is attached to the pivotally mounted hook member 10 and by raising or lowering this lever the pivotally mounted hook member is moved back and forward. A spring 13 biases the pivotally mounted hook member in a direction away from the extendable hook member.  A guide bar 14 is welded to the underside of the plate adjacent to the pivotally mounted hook member.

In use the periphery of the central opening of a vehicle wheel is engaged with the extendable hook member 6.  The operator then applies his weight to the upper edge of the wheel causing the wheel to pivot about the extendable hook member.  During this pivotal movement the inner rim of the wheel strikes the sloping edge of pivotally mounted hook member 10 causing the hook 10 to be driven back toward the extendable hook member 6, until it clears the rim of the wheel.  The hook then springs back into position under the action of spring 13 and the wheel is thus held by both hooks 10 and 6.  The nut 7 on the extendable hook member is thereafter tightened, clamping the wheel rim up against the underside of the body plate 1.  This clamping action holds the wheel securely, allowing the wheel to be safely transported. An elastomeric material 15 is bonded to the underside of the body plate 1 providing a protecting cushion between wheel and body plate, and damping any vibration between body plate and wheel.  The lever 12 is held down by a washer 16, the washer characterised in that a section thereof has been removed to provide a gap 17 through which the lever 12 may pass.  During transport the nut 7 will be locked tight in a position such that the gap 17 in the washer faces away from the lever 12, and the lever is therefore held down by the washer.

To remove the wheel from the carrier the nut 7 is turned to a position such that the lever 12 and the gap 17 in the washer coincide. The lever is then raised, disengaging the pivotally mounted hook member 10 from the inner rim of the wheel. The wheel however is still held in an horizontal position as the extendable hook member remains tightened. The wheel is thus clamped between the extendable hook member 6 and the body plate at 18. The wheel is prevented from slipping off the extendable hook member by guide bar 14.

It will be appreciated that by loosening the nut 7 the gap between the extendable hook member 6 and the body plate shown at 18 will increase, allowing the wheel to slowly pivot to the ground about hook 6.

It is believed that this invention is an improvement over the prior art for two important reasons. Firstly, it is quick and simple to operate, requiring no manoeuvring of the wheel once it has been clipped into position. The nut 7 on the extendable hook member is simply tightened securing the wheel in position ready for transportation. Secondly by providing means whereby the wheel can slowly be lowered to the ground, the problem encountered with the wheel falling and possibly injuring the user has been eliminated.

0076881

## CLAIMS

1.  A vehicle spare wheel carrier comprising a body (1) having means (2) whereby it can be mounted in a suitable position to the chassis (5) of a vehicle, and characterised by an extendable hook member (6) secured to the body by a nut (7), a pivotally mounted hook member (10) hinged to the body and movable in an effectively rectilinear direction towards and away from the extendable hook member, and a lever (12) attached to the pivotally mounted hook member to operate said pivotally mounted hook member, the two hook members being so located that when the carrier is mounted on a vehicle the periphery of the central opening of a vehicle wheel can be engaged between the hook members such that movement of the extendable hook member will clamp or release the wheel rim with respect to the body.

2.  A spare wheel carrier as claimed in Claim 1, in which the body (1) of the carrier forms with the extendable hook member (6) a clamp whereby the spare wheel will be held up against the body (at 18) of the carrier when the nut (7) is in a tightened position, and the spare wheel will be lowered to the ground as the nut is loosened.

3.  A spare wheel carrier as claimed in Claim 2, in which a sheet of elastomeric material (15) is secured to the underside of the carrier body (1) and against which sheet the wheel hub will seat when in position.

4.  A spare wheel carrier as claimed in any preceding Claim, in which a locating bar (8) is affixed to the underside of the body (1) of the carrier such that when the pivotally mounted hook (10) is disengaged from the

0076881

wheel the wheel is still held in position on the carrier by the locating bar.

5. A spare wheel carrier as claimed in any preceding Claim, in which the nut (7) on the extendable hook member (6) has a large diameter washer (16) attached thereto, the washer being characterised in that it has a gap (17) therein sufficiently wide to allow the lever (12) to pass through said gap and thereafter be held down by the washer.

6. A spare wheel carrier as claimed in any preceding Claim, in which a spring (13) is provided to bias the pivotally mounted hook member (10) away from the extendable hook member (6).

7. A spare wheel carrier as claimed in any preceding Claim, in which guide means (14) are provided to retain the extendable hook member (6) aligned with the pivotally mounted hook member (10).

8. A spare wheel carrier, substantially as herein described with reference to the accompanying drawings.

FIG.1

0076881

2/2

FIG. 2

FIG.3

European Patent
Office

**EUROPEAN SEARCH REPORT**

0076881
Application number

EP 81 30 4691.9

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| Y | DE - B2 - 2 357 026 (WIHAG NUTZFAHRZEUG-TECHNIK GMBH & CO. KG) <br> * column 2, lines 34 to 39; column 3, line 19 to column 4, line 35; fig. 1, 3 * <br> -- | 1,6 | B 62 D 43/02 |
| Y | GB - A - 2 003 809 (L.-O. NILSSON) <br> * claim 1; page 1, line 117 to page 2, line 108; fig. 1, 2 * <br> -- | 1,6 | TECHNICAL FIELDS SEARCHED (Int.Cl.³) |
| A | GB - A - 1 310 863 (WHEEL CARRIER HOLDINGS) <br> * claim 1; page 1, line 89 to page 2, line 26; fig. 1 to 4 * <br> -- | | B 62 D 43/00 |
| A | GB - A - 891 171 (HANDS LTD.) <br> * page 1, line 59 to page 2, line 6; fig. 1 to 3 * <br> ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 24-05-1982 | PETTI |

EPO Form 1503.1 06.78